(19) Europäisches Patentamt / European Patent Office / Office européen des brevets

(11) **EP 3 992 252 A1**

(12) **EUROPEAN PATENT APPLICATION**
published in accordance with Art. 153(4) EPC

(43) Date of publication:
**04.05.2022 Bulletin 2022/18**

(21) Application number: **20831796.6**

(22) Date of filing: **23.06.2020**

(51) International Patent Classification (IPC):
**C08L 83/07** (2006.01)   **C08K 3/01** (2018.01)
**C08K 5/541** (2006.01)   **C08L 83/04** (2006.01)
**C08L 83/06** (2006.01)

(52) Cooperative Patent Classification (CPC):
**C08K 3/01; C08K 5/541; C08L 83/04; C08L 83/06**

(86) International application number:
**PCT/JP2020/024668**

(87) International publication number:
**WO 2020/262407 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2019 JP 2019119085**

(71) Applicant: **Sekisui Polymatech Co., Ltd.**
**Saitama-city, Saitama 338-0837 (JP)**

(72) Inventors:
• **UMETANI, Hiroshi**
  **Saitama-city, Saitama 338-0837 (JP)**
• **KUDOH, Hiroki**
  **Saitama-city, Saitama 338-0837 (JP)**

(74) Representative: **Ter Meer Steinmeister & Partner Patentanwälte mbB**
**Nymphenburger Straße 4**
**80335 München (DE)**

(54) **THERMALLY CONDUCTIVE COMPOSITION PACKAGE, AND TWO-COMPONENT CURING TYPE THERMALLY CONDUCTIVE COMPOSITION**

(57) The thermally conductive composition package of the present invention has a resin-made container, and a thermally conductive silicone-based composition filled inside the resin-made container, wherein the moisture permeability of the resin-made container is 0.01 to 10 g/m$^2$·24 hr. The thermally conductive silicone-based composition contains an alkenyl group-containing organopolysiloxane, a hydrogenorganopolysiloxane and a thermally conductive filler, and a specific silicon compound. The content of the specific silicon compound with respect to the total amount of organosilicon-based compounds in the thermally conductive silicone-based composition is 0.1 to 10% by mass. According to the present invention, even when the curable thermally conductive silicone-based composition is filled in the resin-made container and stored for a long time, the deterioration of the curability can be prevented.

EP 3 992 252 A1

**Description**

**Technical Field**

The present invention relates to a thermally conductive composition package and a two-component curable thermally conductive composition.

**Background Art**

As thermally conductive compositions, curable and liquid ones are broadly known, and they are filled between a heating element and a heat-dissipating element, thereafter cured to form cured materials, which are used as thermally conductive members to transfer heat generated by the heating element to the heat-dissipating element. The curable and liquid thermally conductive compositions, which has flowability, can fill up any gaps between the heating element and the heat-dissipating element. Hence, even when gaps between the heating element and the heat-dissipating element are not uniform, the cured materials to be formed can fill up the gaps and are utilized as thermally conductive interstitial materials. The thermally conductive interstitial materials can exhibit good thermal conductivity by being brought into tight contact with the surface of the heating element and the surface of the heat-dissipating element.

As the above thermally conductive compositions, curable silicone-based compositions having an alkenyl-containing organopolysiloxane, a hydrogenorganopolysiloxane and a thermally conductive filler are known. For example, as disclosed in Patent Literature 1, it is known that in order to improve wettability of a thermally conductive filler, an alkoxysilane compound, an alkoxysiloxane oligomer or the like is used in the thermally conductive composition in order to secure flowability of the thermally conductive composition even when the thermally conductive filler is highly filled.

**Citation List**

**Patent Literature**

PTL1: JP 2008-38137 A

**Summary of Invention**

**Technical Problem**

Curable silicone-based compositions to be used as thermally conductive compositions are filled and stored and sold in metal containers such as drums in many cases. In recent years, however, applications of thermally conductive compositions are expanding including use for vehicle parts such as battery modules, and the sale and distribution of the thermally conductive compositions is increasing in the form of being filled in resin-made containers such as plastic syringes and plastic barrels.

However, when the thermally conductive compositions composed of the curable silicone-based compositions are filled in resin-made containers and stored for a long time, there may arise a problem of deterioration of the curability.

Then, an object of the present invention is to provide a thermally conductive composition package capable of preventing deterioration of curability even when a curable thermally conductive silicone-based composition is filled in a resin-made container and stored for a long time.

**Solution to Problem**

The present inventors have studied factors contributing to deterioration of the curability when a curable thermally conductive silicone-based composition is filled in a resin-made container, and have found that the resin-made container has a low moisture resistance as compared with metal containers, and a slight amount of moisture infiltrates inside the resin-made container through the wall of the resin-made container and deteriorates the curability of the silicone-based composition. Then, as a result of exhaustive further studies, they have found that, even when a curable thermally conductive silicone-based composition is filled in a resin-made container, use of a resin-made container having a moisture permeability in a certain range and incorporation of a certain amount of a specific silicon compound in the silicone-based composition can prevent the deterioration of the curability by moisture infiltrating inside the resin-made container, which has led to the completion of the following present invention.

The present invention has the gist of the following [1] to [5].

[1] A thermally conductive composition package comprising a resin-made container and a thermally conductive silicone-based composition filled inside the resin-made container,

wherein the resin-made container has a moisture permeability at 40°C and 90%RH of 0.01 to 10 g/m$^2$·24 hr as measured by the method according to JIS Z0208;
the thermally conductive silicone-based composition comprises an alkenyl group-containing organopolysiloxane, a hydrogenorganopolysiloxane, a thermally conductive filler, and at least one silicon compound selected from the group consisting of alkoxysilane compounds and alkoxysiloxane compounds;
the silicon compound has a molecular weight of 180 or higher and an alkoxy group content of 20% by mass or higher; and
the content of the silicon compound with respect to the total amount of organosilicon-based compounds in the thermally conductive silicone-based composition is 0.1 to 10% by mass.

[2] The thermally conductive composition package according to the above [1], wherein the thermally conductive composition package comprises a first container and a second container, and a first and a second composition filled in the first and the second container, respectively;

the first composition comprises an alkenyl group-containing organopolysiloxane and an addition reaction catalyst; and
the second container is the resin-made container, and the second composition is the thermally conductive silicone-based composition.

[3] The thermally conductive composition package according to the above [2], wherein the first composition is free of hydrogenorganopolysiloxane.
[4] The thermally conductive composition package according to the above [2] or [3], wherein the second composition is free of addition reaction catalyst.
[5] A two-component curable thermally conductive composition, comprising a first composition and a second composition, wherein curing thereof is promoted by mixing the first and second compositions,

wherein the first composition comprises an alkenyl group-containing organopolysiloxane and an addition reaction catalyst;
the second composition comprises an alkenyl group-containing organopolysiloxane, a hydrogenorganopolysiloxane, a thermally conductive filler, and at least one silicon compound selected from the group consisting of alkoxysilane compounds and alkoxysiloxane compounds;
the silicon compound has a molecular weight of 180 or higher and an alkoxy group content of 20% by mass or higher; and
the content of the silicon compound with respect to the total amount of organosilicon-based compounds in the second composition is 0.1 to 10% by mass.

**Advantageous Effect of Invention**

According to the present invention, even when a curable thermally conductive silicone-based composition is filled in a resin-made container and stored for a long time, the deterioration of the curability can be prevented.

**Brief Description of Drawings**

[Fig. 1] Fig. 1 is one embodiment of a barrel to be used as a resin-made container.
[Fig. 2] Fig. 2 is one embodiment of a two-component barrel to be used as a resin-made container.
[Fig. 3] Fig. 3 is a schematic perspective view illustrating an outline of a sticking test.

**Description of Embodiments**

<Thermally conductive composition package>

The thermally conductive composition package of the present invention comprises a resin-made container and a thermally conductive silicone-based composition filled inside the resin-made container.

[Resin-made container]

The resin-made container to be used in the present invention is one having a moisture permeability at 40°C and 90%RH of 0.01 to 10 g/m$^2$·24 hr as measured by the method according to JIS Z0208. In a resin-made container, when the moisture permeability becomes higher than 10 g/m$^2$·24 hr, due to that there becomes too much the moisture infiltrating inside the resin-made container through the container during storage, even when a thermally conductive silicone-based composition is one having a formulation described later, the deterioration of the curability during a long-term storage cannot sufficiently be prevented. Then, when the moisture permeability becomes lower than 0.01 g/m$^2$·24 hr, it becomes difficult to produce the resin-made container for general purposes

From these viewpoints, the moisture permeability of the resin-made container is preferably 0.01 to 5.0 g/m$^2$·24 hr and more preferably 0.05 to 1.0 g/m$^2$·24 hr. Here, the moisture permeability of a resin-made container is a moisture permeability of the minimum-thickness portion of the resin-made container. Specifically, the moisture permeability can be determined such that there is fabricated a sample having the same thickness as the minimum thickness of the resin-made container and composed of a resin of the same material as the container wall of the resin-made container, and the moisture permeability of the sample was measured according to JIS Z0208.

The material of the resin-made container may be a material that is inactive to a thermally conductive silicone-based composition to be filled, that does not react or corrode even upon contacting with a silicone-based composition, and that has a moisture permeability which can be regulated in the above range. The material specifically includes polyolefinic resins such as polypropylene resins and polyethylene resins, polyester-based resins such as polybutylene terephthalate (PBT) resins, polycarbonate resins, acrylonitrile butadiene styrene (ABS)-based resins, polyamide resins, and fluororesins such as polychlorotrifluoroethylene (PCTFE).

These resins may be used singly or concurrently in two or more. Further, the resin-made container may have a single-layer structure or may have a multilayer structure. In the case of the multilayer structure, the resin-made container may have, for example, a structure in which a gas barrier layer high in the gas barrier property is sandwiched between an inner layer and an outer layer, or may have another structure.

The resin-made container is a member having a space inside which the thermally conductive silicone-based composition is accommodated, and the space and the outside are divided by a resin material. The wall of the resin-made container dividing the space accommodating the thermally conductive silicone-based composition and the outside may be made of a resin, and a part of the resin-made container may be constituted of a metal, an inorganic material or the like.

The thickness of the resin-made container is not especially limited as long as the moisture permeability is in the above range, but is, for example, 0.1 to 50 mm. By making the thickness to be 0.1 mm or larger, the strength of the resin-made container can be secured; and by making the thickness to be 50 mm or smaller, the weight and the like of the resin-made container are prevented from becoming higher than necessary. Then by making the thickness to be 1 to 50 mm, it becomes easy for the moisture permeability to fall within the above predetermined range. From these viewpoints, the thickness of the resin-made container is preferably 0.2 to 20 mm and more preferably 0.5 to 8 mm. Here, the thickness of the resin-made container is a thickness of the wall of the space accommodating the thermally conductive silicone-based composition, and the minimum thickness of the wall may be in the above range. Here, in the present description, the wall does not include a member (lid body) sealing an opening of the container and is a part excluding the member.

The container may be any container as long as being one capable of accommodating the thermally conductive silicone-based composition, and may be in any form of a bottle, a drum, a bag, a box, a tube, a barrel and the like. These containers are usually each installed with an opening for filling or discharging the thermally conductive silicone-based composition therethrough. The opening is installed with a lid part such as a cap preferably to seal the container inside. Among the above, the container is desirably a barrel. The barrel is a cylindrical container, and used, for example, as a syringe by a piston being inserted inside.

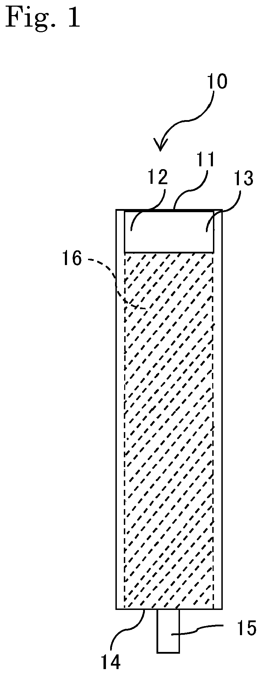

One embodiment of the barrel is illustrated in Fig. 1. As illustrated in Fig. 1, a barrel 10 is a container to be used as a syringe by a piston (not shown in figure) being inserted inside, and the barrel inside is filled with a thermally conductive silicone-based composition 16. In the barrel 10, the rear end 11 is installed with an opening 12, and the opening 12 is sealed with a lid body 13. The front end 14 also is installed with a delivery port (opening) 15, and the delivery port 15 is sealed with a lid body not shown in figure. In the barrel 10, the lid body 13 is taken off and a piston is inserted through the opening 12, and the thermally conductive silicone-based composition 16 is squeezed out to the front end side by the piston reciprocally movable in the axial direction of the barrel and delivered from the delivery port 15 to the outside and used.

In the case of a two-component type as described later, the thermally conductive composition package may have a first container to be filled with a first composition (first component) and a second container to be filled with a second composition (second component). In the case where the thermally conductive composition package has the first container and the second container, at least the second container only is desirably the above-mentioned specific resin-made container. In the present invention, in the case of two-component type, as described later, since the second composition is the thermally conductive silicone-based composition of the present invention, by making only the second container to have a predetermined moisture permeability as described above, the advantageous effect of the present invention can be attained. The first container also, however, may be an above-mentioned specific resin-made container.

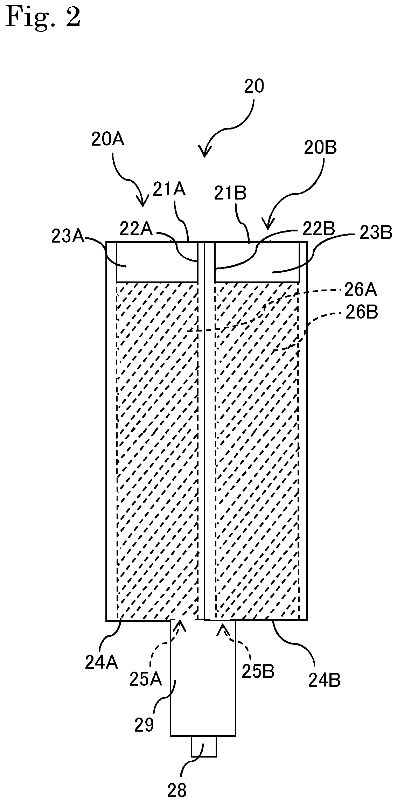

The first and second containers may be separated from each other and be formed as separate bodies, or may be formed integrally. Fig. 2 illustrates a two-component barrel 20 in which a first container and a second container are formed integrally into one member. The two-component barrel 20 has a first and second barrels 20A, 20B to become the first and second containers, respectively. A first composition 26A and a second composition 26B are filled inside the first and second barrels 20A, 20B, respectively. The barrels 20A, 20B are installed with openings 22A, 22B on the rear ends 21A, 21B, respectively, and the openings 22A, 22B are sealed with lid bodies 23A, 23B, respectively. Also the front ends 24A, 24B of the barrels 20A, 20B are installed with openings 25A, 25B, respectively.

The barrels 20A, 20B are formed integrally, and the first and second containers are thereby made into one integrated member. In the barrels 20A, 20B, the lid bodies 23A, 23B are taken off and pistons are inserted through the openings 22A, 22B, respectively, and the first compositions 26A, 26B are squeezed out to the front end sides by the pistons reciprocally movable in the axial direction of the barrels and discharged from the openings 25A, 25B, respectively. The pistons inserted in the barrels 20A, 20B through the openings 22A, 22B may be in an integrated form by connecting their rear ends, or other means. Since the integrated pistons, when being pressed, result in traveling the same distance, the first composition 26A and the second composition 26B are enabled to be discharged from the openings 25A and 25B in a set ratio (for example, 1/1 in mass ratio).

It is desirable that the two-component barrel 20 has a mixing part 29 connected to both the openings 25A, 25B. A delivery port 28 is connected further to the mixing part 29. The first composition 26A and the second composition 26B discharged from the openings 25A and 25B are mixed by the mixing part 29, and an obtained mixed liquid is delivered from the delivery port 28 to the outside of the two-component barrel 20. Then, the delivery port 28, in the case of not being used, is sealed with a lid part such as a cap not shown in figure.

The mixing part 29 may be connected to both of the openings 25A, 25B and have a space where the first composition 26A and the second composition 26B merge inside thereof, as illustrated in Fig. 2, and is preferably constituted, for example, of a static mixer (not shown in figure).

The static mixer is a mixing device having no driving part, and is a mixer which mixes liquids by making the liquids to pass through inside a tubular body. Examples of the static mixer include mixers in which a mixer element is disposed inside a tubular body. The mixer element includes spirally formed ones and ones in which a plurality of baffleplates is formed.

Then, the two-component barrel 20, though being installed with the mixing part as described above, may be installed with no mixing part. In the case of being installed with no mixing part, the openings 25A, 25B of the barrels 20A, 20B become delivery ports to deliver the first composition 26A and the second composition 26B outside the two-component barrel 20, respectively. In this case, the first composition 26A and the second composition 26B delivered outside from the openings 25A, 25B of the barrels 20A, 20B may be suitably mixed outside the two-component barrel 20 by well-known means.

[Thermally conductive silicone-based composition]

The thermally conductive silicone-based composition to be used in the present invention comprises an alkenyl group-containing organopolysiloxane, a hydrogenorganopolysiloxane, a thermally conductive filler, and at least one silicon compound selected from the group consisting of alkoxysilane compounds and alkoxysiloxane compounds.

(Alkenyl group-containing organopolysiloxane)

Examples of an alkenyl group to be used in the alkenyl group-containing organopolysiloxane include alkenyl groups having 2 to 6 carbon atoms, such as a vinyl group, an allyl group, 1-butenyl group and 1-hexenyl group, but from the viewpoint of ease of synthesis and costs, a vinyl group is preferable. The organopolysiloxane having an alkenyl group(s) may be an organopolysiloxane having one or more alkenyl groups in the molecule, and it is preferable to use an organopolysiloxane having two or more alkenyl groups in the molecule, and it is more preferable to use an organopolysiloxane having two alkenyl groups in the molecule.

As the organopolysiloxane having an alkenyl group(s), an organopolysiloxane having two or more alkenyl groups in the molecule may be used singly, but there may be used concurrently an organopolysiloxane having two or more alkenyl groups in the molecule and an organopolysiloxane having one alkenyl group in the molecule.

The organopolysiloxane having an alkenyl group(s) is preferably a vinyl-terminated organopolysiloxane having a vinyl group on the terminal, and more preferably vinyl-both terminated organopolysiloxane having a vinyl group on the both terminals.

The alkenyl group-containing organopolysiloxane may be used singly in one kind, or may be used concurrently in two or more kinds.

(Hydrogenorganopolysiloxane)

The hydrogenorganopolysiloxane is an organopolysiloxane having hydrosilyl group(s) (SiH), and preferably has at least two hydrosilyl groups (SiH). The hydrogenorganopolysiloxane additionally reacts with the alkenyl group-containing organopolysiloxane to become a curing agent to cure the thermally conductive silicone-based composition. The hydrogenorganopolysiloxane may be used in one kind, or may be used concurrently in two or more kinds.

In the thermally conductive silicone-based composition comprising an alkenyl group-containing organopolysiloxane and a hydrogenorganopolysiloxane as in the present invention, if the hydrogenorganopolysiloxane only undergoes inactivation, deterioration and the like due to side reactions as described later, the ratio of the alkenyl group-containing organopolysiloxane and the hydrogenorganopolysiloxane results in deviating from a design value. On the other hand, for the thermally conductive composition package filled with the thermally conductive silicone-based composition containing the both, the adjustment of these ratios in use sites is difficult. Hence, the thermally conductive silicone-based composition having undergone inactivation, deterioration and the like during a long-term storage is difficult to recycle, and has to be discarded in many cases.

In the present invention, as described later, side reactions of the hydrogenorganopolysiloxane is suitably prevented. Therefore, even the thermally conductive silicone-based composition containing the alkenyl group-containing organopolysiloxane and the hydrogenorganopolysiloxane and having been stored for a long time in the thermally conductive composition package can suitably be used without being discarded.

(Thermally conductive filler)

The thermally conductive filler is a substance to impart the thermal conductivity to a cured body formed from the thermally conductive silicone-based composition, and substances good in the thermal conductivity can be used. Examples of a material of the thermally conductive filler include metals, carbon, metal oxides, metal nitrides, metal carbides and metal hydroxides. Examples of the metals include copper and aluminum. Examples of the carbon include pitch-based carbon fibers, PAN-based carbon fibers, fibers made by carbonizing resin fibers, fibers made by graphitizing resin fibers and graphite powder.

Examples of the metal oxides include aluminum oxide, magnesium oxide, zinc oxide, iron oxide and quartz; examples of the metal nitrides include boron nitride and aluminum nitride. Examples of the metal carbides include silicon carbide; examples of the metal hydroxides include aluminum hydroxide.

The shape of the thermally conductive filler may be spherical or may also be non-spherical (a shape having anisotropy) such as fibrous or laminar. It is preferable that the thermally conductive filler contains a plurality of spherical particle groups having different average particle diameters. In this case, the viscosity of the thermally conductive silicone-based composition can be reduced. That is, since the thermally conductive silicone-based composition highly filled with the thermally conductive filler can be obtained in a predetermined viscosity, the thermally conductive silicone-based composition is in a low viscosity and the thermal conductivity of a thermally conductive member formed from the thermally conductive silicone-based composition can simultaneously be raised.

Then, as the thermally conductive filler, it is preferable to use a substance having electric insulativeness. Specific suitable examples of the thermally conductive filler include, from the viewpoint of being excellent in the electric insulativeness and the thermal conductivity, aluminum oxide, boron nitride, aluminum nitride, silicon carbide and aluminum hydroxide. The thermally conductive filler may be used singly in one kind or may be used concurrently in two or more kinds.

Among the above, one or more selected from the group consisting of aluminum oxide and aluminum hydroxide are preferable, and use of the both is more preferable.

The content of the thermally conductive filler in the thermally conductive silicone-based composition is, with respect to 100 parts by mass of the total amount of organosilicon-based compounds, for example, in the range of 100 to 2,000 parts by mass. Here, the total amount of organosilicon-based compounds is the total amount of organosilicon-based compounds contained in the thermally conductive silicone-based composition, and is the total amount of the organopolysiloxanes and organosilicon-based compounds (alkoxysiloxane compounds and the like described later) other than the organopolysiloxanes. The organosilicon-based compounds are organic compounds containing silicon element. The total amount of organosilicon-based compounds is, for example, in the case where the alkenyl group-containing organopolysiloxane, the hydrogenorganopolysiloxane and the silicon compound are contained in the thermally conductive silicone-based composition, the total amount of these. In the case where the alkenyl group-containing organopolysiloxane, the hydrogenorganopolysiloxane, the silicon compound and other organopolysiloxanes as optional ingredients are contained in the thermally conductive silicone-based composition, the total amount of the organosilicon-based compound is the total amount of these.

By making the content of the thermally conductive filler to be 100 parts by mass or higher, the thermal conductivity of a thermally conductive member formed from the thermally conductive silicone-based composition becomes good. Then by making that to be 1,500 parts by mass or lower, the viscosity of the thermally conductive silicone-based composition is prevented from becoming too high and the handleability becomes good. From these viewpoints, the content of the thermally conductive filler is, with respect to 100 parts by mass of the total amount of organosilicon-based compounds, preferably in the range of 400 to 1,600 parts by mass and more preferably in the range of 600 to 1,200 parts by mass.

(Silicon compound)

The thermally conductive silicone-based composition of the present invention comprises at least one silicon compound selected from the group consisting of alkoxysilane compounds and alkoxysiloxane compounds as described above. The silicon compound of the present invention is one having a molecular weight of 180 or higher and an alkoxy group content of 20% by mass or higher. Then, the content of the silicon compound in the thermally conductive silicone-based composition is, with respect to the total amount of organosilicon-based compounds, 0.1 to 10% by mass.

In the present invention, since the moisture resistance becomes good by making a specific silicon compound to be contained in a specific amount, in the case where the thermally conductive silicone-based composition is filled in the resin-made container having a certain moisture permeability, even after a long-term storage, the curability can well be retained and the long-term storage stability becomes good. The principle thereof is not clear, but is presumed as follows.

Although the hydrogenorganopolysiloxane contained in the thermally conductive silicone-based composition causes side reactions due to a slight amount of moisture infiltrating inside the resin-made container, and deteriorates the curability of the composition, in the present invention, by making the specific silicon compound to be contained in the predetermined amount, the silicon compound preferentially reacts with water, preventing the side reactions of the hydrogenorganopolysiloxane. Further in the thermally conductive silicone-based composition, since the content of the specific silicon compound is the predetermined amount, the addition reaction of the hydrogenorganopolysiloxane and the alkenyl group-containing organopolysiloxane is not inhibited by the silicon compound and a high curability can be retained.

Further due to that the thermally conductive silicone-based composition contains the silicon compound, the affinity of the thermally conductive filler for the organopolysiloxanes is improved; the dispersing ability of the thermally conductive filler is enhanced; the thermal conductivity of a thermally conductive member formed from the thermally conductive silicone-based composition is raised; and the heat dissipativity is improved.

On the other hand, when the molecular weight of the silicon compound is lower than 180 or when the content of alkoxy groups in the silicon compound is lower than 20% by mass, the moisture resistance of the thermally conductive silicone-based composition cannot sufficiently be improved and the curability after the long-term storage cannot be made good. This is presumably because the side reactions of the hydrogenorganopolysiloxane with water cannot sufficiently be prevented by the silicon compound. In more detail, in the case where the molecular weight is lower than 180, this is conceivably because the silicon compound gradually vaporizes in some cases even when being filled in a predetermined container, and the content thereof decreases upon long-term storage. Also in the case where the content of alkoxy groups in the silicon compound is lower than 20% by mass, this is conceivably because the effective amount of the alkoxy groups to suppress the side reactions becomes small.

From the viewpoint of improving the moisture resistance and retaining the curability after a long-term storage excellent, the molecular weight of the silicon compound is preferably 195 or higher, more preferably 230 or higher and still more preferably 260 or higher. Further from the viewpoint of improving the moisture resistance, making the long-term storage stability good, and improving the curability, the molecular weight of the silicon compound is, for example, 20,000 or lower, preferably 12,000 or lower, more preferably 5,000 or lower and still more preferably 3,500 or lower.

Here, the molecular weight means, for the alkoxysilane compound, the formula weight which can be calculated from the chemical structural formula and, for the alkoxysiloxane compound, the weight-average molecular weight. The weight-average molecular weight is a weight-average molecular weight in terms of standard polystyrene measured by gel permeation chromatography (GPC).

The content of alkoxy groups in the silicon compound is, as described above, 20% by mass or higher, but is preferably 24% by mass or higher. By making the content to be 24% by mass or higher, the thermally conductive silicone-based composition is enabled to be more improved in the moisture resistance and to be made excellent in the curability after a long-term storage. Further it also becomes easy for the affinity for the thermally conductive filler to be improved.

The content of alkoxy groups in the silicon compound is, from the viewpoint of making the affinity for the organopolysiloxanes good, for example, 75% by mass or lower, but is preferably 70% by mass or lower.

The content of alkoxy groups of the alkoxysilane compound can be calculated from the chemical structural formula, and the content of alkoxy groups of the alkoxysiloxane compound can be quantitatively determined by 1H-NMR.

The content of the silicon compound in the thermally conductive silicone-based composition is, as described above, with respect to the total amount of organosilicon-based compounds, 0.1 to 10% by mass, but when the content is lower than 0.1% by mass, the effect of addition of the silicon compound is not sufficiently exhibited, and there arise risks of deteriorating the moisture resistance and deteriorating the long-term storage stability. Then when the content is higher than 10% by mass, there arise risks of inhibiting the addition reaction by the silicon compound to deteriorate the curability and deteriorating physical properties of a thermally conductive member formed from the thermally conductive silicone-based composition.

From the viewpoint of the moisture resistance, the curability and the physical properties of a cured material, the content of the silicon compound is, with respect to the total amount of organosilicon-based compounds, preferably 0.3 to 7% by mass, more preferably 0.4 to 5% by mass and still more preferably 0.5 to 2.5% by mass.

<Alkoxysilane compound>

The alkoxysilane compound is a compound having a structure in which one to three bonds among four bonds one silicon atom (Si) has are each bonded with an alkoxy group, and the other bonds are each bonded with an organic substituent. The alkoxysilane compound, which has an alkoxy group(s), can inhibit reaction of water with the hydrogenorganopolysiloxane and improve the moisture resistance. Further, the alkoxysilane compound enhances the affinity for the thermally conductive filler and improves the dispersing ability of the thermally conductive filler in the thermally conductive silicone-based composition.

The alkoxysilane compound may be a compound having one silicon atom (Si) in the molecule, or may also be a compound having two or more silicon atoms (Si) therein. Specifically, the alkoxysilane compound is preferably a compound having one to four silicon atoms (Si), more preferably a compound having one to three silicon atoms (Si), still more preferably a compound having one or two silicon atoms (Si), and most preferably a compound having one silicon atom (Si). Here, in the case of having two or more silicon atoms (Si) in the molecule, it is desirable that the silicon atoms (Si) are bonded through an organic substituent.

The alkoxy group the alkoxysilane compound has is, for example, an alkoxy group having 1 to 6 carbon atoms, and specifically includes a methoxy group, an ethoxy group, a protoxy group, a butoxy group, a pentoxy group and a hexatoxy group. From the viewpoint of easy availability and moisture resistance, the number of carbon atoms of the alkoxy group is preferably 1 or 2; therefore, the alkoxysilane compound is preferably an alkoxysilane compound having either one of a methoxy group and an ethoxy group.

In the alkoxysilane compound, the number of alkoxy groups bonded to each silicon atom is, from the viewpoint of enhancing the affinity for the thermally conductive filler and raising the moisture resistance, preferably 2 or 3, and more preferably 3. Therefore, it is more preferable that the alkoxysilane compound is at least one selected from the group consisting of trimethoxysilane compounds and triethoxysilane compounds.

In the alkoxysilane compound, the organic substituent bonded to silicon atoms (Si) may be a hydrocarbon group or may also be a group having at least one functional group selected from the group consisting of a (meth)acryloyl group, a (meth)acryloxy group, a carboxyl group, an epoxy group, an isocyanate group, an isocyanurate group and a hydroxyl group. The organic substituent is an organic substituent represented by $R^1$ in the formula (1) described later, and details thereof will be described later. Here, the (meth)acryloyl group means a methacryloyl group or an acryloyl group, and other similar terms are applied similarly.

The alkoxysilane compound is, for example, a compound represented by the following formula (1):

$$R^1 \left[ Si(R^2)_{3-a}(OR^3)_a \right]_n \qquad (1)$$

wherein $R^1$ is an organic substituent as described above, but is, for example, an organic substituent having 1 to 30 carbon atoms; $R^2$ are each independently an alkyl group having 1 to 4 carbon atoms; $R^3$ are each independently an alkyl group having 1 to 6 carbon atoms; a is an integer of 1 to 3; and n is an integer of 1 to 4.

n represents the number of silicon atoms (Si) contained in the molecule, and is 1 to 4 as described above, but is preferably 1 to 3, more preferably 1 or 2 and especially preferably 1.

The number of carbon atoms of $R^1$ is, from the viewpoint of raising the molecular weight of the alkoxysilane compound and improving the moisture resistance, preferably 3 or more, more preferably 4 or more and still more preferably 6 or more. Further from the viewpoint of the curability and the moisture resistance, the number of carbon atoms of $R^1$ is preferably 20 or less, more preferably 16 or less and still more preferably 12 or less.

$R^1$ may be a hydrocarbon group or may also be a group having at least one functional group selected from the group consisting of a (meth)acryloyl group, a (meth)acryloxy group, a carboxyl group, an epoxy group, an isocyanate group, an isocyanurate group and a hydroxyl group. $R^1$ having the functional group is desirably, for example, a group composed of a combination with a hydrocarbon group, and the functional group is preferably bonded to a silicon atom (Si) through the hydrocarbon group.

The hydrocarbon group bonding the functional group and the silicon atom is preferably a divalent hydrocarbon group, more preferably a divalent saturated hydrocarbon group and still more preferably an alkylene group. Specific examples of the alkylene group are the same as specific examples of an alkylene group described later, but a preferable alkylene group in this case is an alkylene group having about 2 to 6 carbon atoms.

$R^1$ is, from the viewpoint of making the curability good without inhibiting the curing reaction of the organopolysiloxanes, among the above, preferably a hydrocarbon group or a group having at least one functional group selected from the group consisting of a (meth)acryloyl group, a (meth)acryloxy group, an epoxy group and an isocyanurate group, more preferably a hydrocarbon group or a group having a functional group selected from the group consisting of a (meth)acryloyl group and an isocyanurate group, and from the viewpoint of making both of the curability and the moisture resistance excellent and making the physical properties of a cured material good, preferably a hydrocarbon group.

The hydrocarbon group constituting $R^1$ may be an aliphatic hydrocarbon group or may have an aromatic ring. Then the aliphatic hydrocarbon group may be unsaturated or saturated, but is preferably a saturated aliphatic hydrocarbon group. Specific examples of the hydrocarbon group include an alkyl group, an aryl group, an alkylene group and an alkenyl group, but among these, an alkyl group, an aryl group and an alkylene group are preferable, and an alkyl group is especially preferable.

The alkyl group may have a straight-chain structure, a cyclic structure or a branched structure. Specific examples of the alkyl group include alkyl groups having about 3 to 16 carbon atoms, such as an isopropyl group, an n-propyl group, an n-butyl group, an isobutyl group, an s-butyl group, a tert-butyl group, an n-pentyl group, an n-hexyl group, a cyclohexyl group, an n-heptyl group, an n-octyl group, an n-nonyl group, an n-decyl group, an n-undecyl group and an n-dodecyl group. Among the above, especially preferable are alkyl groups having 6 to 12 carbon atoms, such as an n-hexyl group, a cyclohexyl group, an n-heptyl group, an n-octyl group, an n-nonyl group, an n-decyl group, an n-undecyl group and an n-dodecyl group.

Then, the aryl group includes aryl groups having about 6 to 12 carbon atoms, such as a tolyl group, a phenyl group, a xylyl group, a benzyl group and a phenylethyl group, and preferable are aryl groups having 6 to 9 carbon atoms.

The alkylene group includes alkylene groups having about 2 to 12 carbon atoms, such as an ethylene group, a trimethylene group, a tetramethylene group, a pentamethylene group, a hexamethylene group, an octamethylene group, a decamethylene group and a dodecamethylene group, and preferable are alkylene groups having 6 to 10 carbon atoms, such as a hexamethylene group, an octamethylene group and a decamethylene group.

$R^2$ are each preferably a methyl group or an ethyl group, and more preferably a methyl group. $R^3$ are each preferably a methyl group or an ethyl group, and more preferably a methyl group. Further a is 1 to 3, but is preferably 2 or 3 and more preferably 3.

Preferable specific examples of the alkoxysilane compound include alkyl group-containing alkoxysilane compounds, alkylene group-containing alkoxysilane compounds, (meth)acryloyl group-containing alkoxysilane compounds, aromatic group-containing alkoxysilane compounds and isocyanurate group-containing alkoxysilane compounds.

The alkyl group-containing alkoxysilane compound is a compound in which in the formula (1), $R^1$ is an alkyl group and n is 1, and a is preferably 2 or 3 and more preferably 3. The number of carbon atoms of $R^1$ is preferably 3 to 16 and more preferably 6 to 12. Further $R^2$ and $R^3$ are each independently preferably a methyl group or an ethyl group and more preferably a methyl group.

Preferable specific examples of the alkyl group-containing alkoxysilane compound include n-propyltriethoxysilane, n-butyltriethoxysilane, isobutyltriethoxysilane, n-hexyltrimethoxysilane, n-hexyltriethoxysilane, cyclohexylmethyldimethoxysilane, cyclohexylmethyldiethoxysilane, n-octyltrimethoxysilane, n-octyltriethoxysilane, n-decyltrimethoxysilane, n-decyltriethoxysilane, n-dodecyltrimethoxysilane and n-dodecyltriethoxysilane. Among these, more preferable is at least one selected from the group consisting of n-hexyltrimethoxysilane, n-hexyltriethoxysilane, n-octyltrimethoxysilane, n-octyltriethoxysilane, n-decyltrimethoxysilane, n-decyltriethoxysilane, n-dodecyltrimethoxysilane and n-dodecyltriethoxysilane.

The alkylene group-containing alkoxysilane compound is, for example, a compound in which $R^1$ is an alkylene group and n is 2, and a is preferably 2 or 3 and more preferably 3. The number of carbon atoms of $R^1$ is preferably 2 to 12 and more preferably 6 to 10. Further $R^2$ and $R^3$ are each independently preferably a methyl group or an ethyl group and more preferably a methyl group.

Preferable specific examples of the alkylene group-containing alkoxysilane compound include 1,6-bis(trimethoxysilyl)hexane, 1,8-bis(trimethoxysilyl)octane, 1,10-bis(trimethoxysilyl)decane, 1,6-bis(triethoxysilyl)hexane, 1,8-bis(triethoxysilyl)octane and 1,10-bis(triethoxysilyl)decane; and among these, more preferable are 1,6-bis(trimethoxysilyl)hexane and 1,8-bis(trimethoxysilyl)octane.

The (meth)acryloyl group-containing alkoxysilane compound preferably contains a (meth)acryloxy group, and specifically includes compounds in which $R^1$ is a (meth)acryloxyalkyl group and n is 1, and a is preferably 2 or 3 and more preferably 3. The number of carbon atoms of $R^1$ is preferably 4 to 16 and more preferably 5 to 10. Further $R^2$ and $R^3$ are each independently preferably a methyl group or an ethyl group and more preferably a methyl group. Suitable specific examples thereof include 3-(meth)acryloxypropyltrimethoxysilane, 3-(meth)acryloxypropylmethyldimethoxysilane and 3-(meth)acryloxypropyltriethoxysilane; among these, preferable are 3-(meth)acryloxypropyltrimethoxysilane and 3-(meth)acryloxypropyltriethoxysilane.

Examples of the aromatic group-containing alkoxysilane compound include compounds in which $R^1$ is an aryl group and n is 1, and a is preferably 2 or 3 and more preferably 3. The number of carbon atoms of $R^1$ is preferably 6 to 12 and more preferably 6 to 9. Further $R^2$ and $R^3$ are each independently preferably a methyl group or an ethyl group and more preferably a methyl group. Suitable specific examples of the aromatic group-containing alkoxysilane compound include phenyltrimethoxysilane, phenyltriethoxysilane, tolyltrimethoxysilane and tolyltriethoxysilane.

The isocyanurate group-containing alkoxysilane compound includes tris-(trimethoxysilylalkyl) isocyanurate. In this case, the number of carbon atoms of $R^1$ is preferably 9 to 18 and more preferably 9 to 15. The isocyanurate group-containing alkoxysilane compound specifically includes tris-(trimethoxysilylpropyl) isocyanurate and tris-(triethoxysilylpropyl) isocyanurate.

(Alkoxysiloxane compound)

The alkoxysiloxane compound has a structure which has two or more siloxane bonds and in which an alkoxy group is bonded to at least one silicon atom. The alkoxysiloxane compound further has a structure in which an organic substituent is bonded to at least one silicon atom among silicon atoms constituting siloxane bonds.

The alkoxysiloxane compound, which has an alkoxy group, can improve the moisture resistance of the thermally conductive silicone-based composition, as is the case with the alkoxysilane compound. Further, the alkoxysiloxane compound, which has an alkoxy group, can be enhanced in the affinity for the thermally conductive filler. Further, the alkoxysiloxane compound, which has a siloxane structure, becomes excellent in the affinity for the organopolysiloxanes. Hence, the dispersing ability of the thermally conductive filler can be enhanced and it becomes easy to raise the thermal conductivity of a thermally conductive member formed from the thermally conductive silicone-based composition.

The alkoxy group the alkoxysiloxane compound has is, for example, an alkoxy group having 1 to 6 carbon atoms, and specifically includes a methoxy group, an ethoxy group, a protoxy group, a butoxy group, a pentoxy group and a hexatoxy group. From the viewpoint of easy availability and moisture resistance, the number of carbon atoms of the alkoxy group is preferably 1 or 2 and more preferably 1; therefore, the alkoxy group the alkoxysiloxane compound contains is preferably either one of a methoxy group and an ethoxy group, and more preferably a methoxy group.

The organic substituent the alkoxysiloxane compound has may be a hydrocarbon group or may also be a group having at least one functional group selected from the group consisting of a (meth)acryloyl group, a (meth)acryloxy group, a carboxyl group, an epoxy group, an isocyanate group, an isocyanurate group and a hydroxyl group. The organic substituent having the functional group may be, for example, a group composed of a combination with a hydrocarbon group. Then, the functional group may be bonded directly to a silicon atom (Si), or may be bonded through the hydrocarbon group to a silicon atom (Si). The hydrocarbon group bonding the functional group and the silicon atom is preferably a divalent hydrocarbon group, more preferably a divalent saturated hydrocarbon group and still more preferably an alkylene group. Specific examples of the alkylene group are the same as those described in the alkoxysilane compound, but an alkylene group having about 2 to 6 carbon atoms is preferable.

The organic substituent is, from the viewpoint of making the curability good without inhibiting the curing reaction of the organopolysiloxanes, among the above, preferably a hydrocarbon group or a group having at least one functional group selected from the group consisting of a (meth)acryloyl group, a (meth)acryloxy group, a carboxyl group, an epoxy group and an isocyanurate group, and more preferably a hydrocarbon group. The number of carbon atoms of the hydrocarbon group is, for example, 1 to 12, preferably 1 to 9 and more preferably 1 to 6.

The hydrocarbon group may be an aliphatic hydrocarbon group or may have an aromatic ring. Then the aliphatic hydrocarbon group may be unsaturated or saturated, but is preferably a saturated aliphatic hydrocarbon group. Specific examples of the hydrocarbon group include an alkyl group, an aryl group and an alkenyl group, but among these, an alkyl group and an aryl group are preferable, and an alkyl group is more preferable. Then, the alkoxysiloxane compound typically has a plurality of organic substituents, but in this case, it is preferable that the plurality of organic substituents is composed of alkyl groups and aryl groups, or alkyl groups.

The alkyl group to be used for the hydrocarbon group includes alkyl groups having about 3 to 16 carbon atoms, such as a methyl group, an ethyl group, an isopropyl group, an n-propyl group, an n-butyl group, an isobutyl group, an s-butyl group, a tert-butyl group, an n-pentyl group, an n-hexyl group, a cyclohexyl group, an n-heptyl group, an n-octyl group, an n-nonyl group, an n-decyl group, an n-undecyl group and an n-dodecyl group. Among the above, alkyl groups having 1 to 4 carbon atoms are preferable, and most preferable is a methyl group.

Then, the aryl group includes aryl groups having about 6 to 12 carbon atoms, such as a tolyl group, a phenyl group, a xylyl group, a benzyl group and a phenylethyl group, and preferable are aryl groups having about 6 to 9 carbon atoms, and most preferable is a phenyl group.

Examples of the alkoxysiloxane compound include methylmethoxysiloxane oligomers, methylphenylmethoxysiloxane oligomers, methylepoxymethoxysiloxane oligomers and methyl(meth)acryloylmethoxysiloxane oligomers.

The silicon compound may be used singly in one kind, or may be used in two or more kinds. As the silicon compound, the alkoxysilane compound may be used singly in one kind, or may be used concurrently in two or more kinds. Alternatively, the alkoxysiloxane compound may be used singly in one kind, or may be used concurrently in two or more kinds. Further, there may be concurrently used one or more kinds of the alkoxysilane compound and one or more kinds of the alkoxysilane compound. As the silicon compound, it is preferable to use the alkoxysilane compound.

(Other organopolysiloxanes)

The thermally conductive silicone-based composition may contain other organopolysiloxanes as organosilicon-based compounds. The other organopolysiloxanes are organopolysiloxanes other than the above alkenyl group-containing organopolysiloxane, hydrogenorganopolysiloxane and alkoxysiloxane compound as the silicon compound, and the organopolysiloxanes liquid at room temperature (25°C). The other organopolysiloxanes are ingredients optionally added in order to reduce the viscosity of the thermally conductive silicone-based composition and regulate the hardness of a cured material.

Specific examples of the other organopolysiloxanes include straight silicone oils such as dimethylsilicone oils and phenylmethylsilicone oils, and non-reactive modified organopolysiloxanes in which non-reactive organic groups are introduced to main chains having siloxane bonds, side chains bonded to main chains, or terminals of main chains. Examples of the non-reactive modified organopolysiloxanes include polyether-modified silicone oils, aralkyl-modified silicone oils, fluoroalkyl-modified silicone oils, long-chain alkyl-modified silicone oils, higher fatty acid ester-modified silicone oils, higher fatty acid amide-modified silicone oils and phenyl-modified silicone oils.

Among the above, as the other organopolysiloxanes, straight silicone oils are preferable; and among the straight silicone oils, dimethylsilicone oils are more preferable.

The other organopolysiloxanes can be used singly in one kind, or can be used in combinations of two or more kinds.

The viscosity at 25°C of the other organopolysiloxane is, from the viewpoint of imparting good flowability to the thermally conductive silicone-based composition of the present invention, preferably 10 mPa·s or higher and 10,000 mPa·s or lower and more preferably 20 mPa·s or higher and 1,000 mPa·s or lower. The viscosity can be measured by a B-type viscometer, and can be measured, for example, by using a Brookfield rotational viscometer DV-E and using a rotator, Spindle SC-14 at a rotating speed of 10 rpm.

The content of the other organopolysiloxanes in the thermally conductive silicone-based composition is, with respect to the total amount of organosilicon-based compounds described above, 0 to 50% by mass, and preferably 1 to 30% by mass.

(Reaction retardant)

The thermally conductive silicone-based composition may contain a reaction retardant. By making a reaction retardant to be contained, there can be prevented undesired reactions of the alkenyl group-containing organopolysiloxane and the hydrogenorganopolysiloxane in the thermally conductive silicone-based composition. Hence, for example, in the case of a two-component, while before a first component and a second component are mixed, the undesired reactions are prevented to make the storage stability excellent, after being mixed, a reaction is promoted and speedy curing can be attained.

Then, in the case of a one-component type, by making the reaction retardant to be contained, for example, before heating, the alkenyl group-containing organopolysiloxane and the hydrogenorganopolysiloxane can be prevented from reacting.

Examples of the reaction retardant include alcohol derivatives having a carbon-carbon triple bond, such as 3-methyl-1-butyn-3-ol, 3,5-dimethyl-1-hexyn-3-ol, phenylbutynol, 1-ethynyl-1-cyclohexanol and α-methyl-α-ethynylbenzenemethanol; enyne compounds such as 3-methyl-3-penten-1-yne and 3,5-dimethyl-3-hexen-1-yne; alkenyl group-containing low-molecular weight siloxanes such as tetramethyltetravinylcyclotetrasiloxane and tetramethyltetrahexenylcyclotetrasiloxane; and alkyne-containing silanes such as methyl-tris(3-methyl-1-butyn-3-oxy)silane and vinyl-tris(3-methyl-1-butyn-3-oxy)silane.

The content of the reaction retardant in the thermally conductive silicone-based composition is, with respect to 100 parts by mass of the total amount of organosilicon-based compounds, for example, 0.01 to 2 parts by mass, preferably 0.02 to 1 part by mass and more preferably 0.05 to 0.5 part by mass.

(Other ingredients)

The thermally conductive silicone-based composition may be added, as required, with additives other than the above usually used for thermally conductive members. Examples of the additives include reinforcing materials, colorants, heat resistance improvers, surfactants, dispersants, flame retardants, antidegradants and plasticizers.

The thermally conductive silicone-based composition is usually liquid and the viscosity thereof at 25°C is selected preferably in the range of 50 to 2,000 Pa·s. By making the viscosity to be 50 Pa·s or higher, the content of the thermally conductive filler becomes sufficient and in a cured body formed from the thermally conductive silicone-based composition, a sufficient thermal conductivity can be attained. On the other hand, by making the viscosity to be 2,000 Pa·s or lower, the content of the thermally conductive filler can be prevented from becoming higher than necessary, and it becomes easy for the thermally conductive silicone-based composition to be discharged by delivery or the like from a container, making workability good. Further from the viewpoint of making the thermal conductivity and the delivery stability when the composition is delivered to be well-balancedly good, the viscosity is more preferably in the range of 100 to 1,000 Pa·s and still more preferably in the range of 200 to 600 Pa·s.

Here, the viscosity at 25°C is a value obtained by measurement using a B-type viscometer at a spindle rotating speed set at 10 rpm.

In the case where the thermally conductive silicone-based composition has a high viscosity (for example, exceeding 600 Pa·s) due to a high content of the thermally conductive filler, it is difficult to measure the viscosity by a B-type viscometer because of occurrence of slippage or the like of a rotator of the B-type viscometer on a sample in some cases. Alternatively, the viscosity of the thermally conductive silicone-based composition can be represented also by the load of a sticking test at 25°C. Hence, in the case where the viscosity measurement is difficult, the viscosity may be represented by the load of the sticking test; specifically, it is preferable that the thermally conductive silicone-based composition has a load of a sticking test at 25°C of 0.3 N or lower. When the load of the sticking test is 0.3 N or lower, it becomes easy for the thermally conductive silicone-based composition to be discharged by delivery or the like from a container, making workability good.

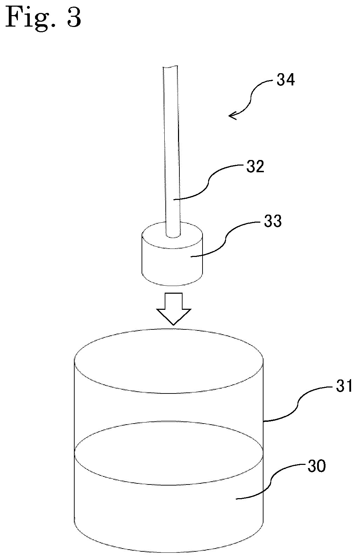

In the sticking test, as illustrated in Fig. 3, first, a thermally conductive silicone-based composition 30 is filled in a cylindrical container 31 of 30 mm in diameter and 50 mm in height, and treated by using a centrifuge at 2,000 rpm for 8 s. This treatment deaerates the thermally conductive silicone-based composition even when having a high viscosity, and makes the thermally conductive silicone-based composition to be put in the state being filled in a uniform thickness on the bottom surface of the container 31. The amount of the thermally conductive silicone-based composition to be filled is adjusted so as to become about 15 mm in height in the test state. Then, a presser 34, which has a rod member 32 of 1 mm in diameter and a discoid pressing part 33 having a flat bottom surface and a diameter of 3 mm and a thickness of 1 mm, is fixed to a load cell, and the thermally conductive silicone-based composition 30 is pressed down by the pressing part 33. At this time, the pressing down speed is 10 mm/min; and the thermally conductive silicone-based composition 30 is pressed down until caving in 3 mm from its surface and the maximum load at this time is measured, and is defined as a load of the sticking test.

The thermally conductive silicone-based composition of the present invention may be used as a one-component type or may be used as a two-component type, and a two-component type is preferable. Hereinafter, there will be described in detail each of the cases where the thermally conductive silicone-based composition is used as a one-component type and a two-component type.

<Two-component type>

In the case where the thermally conductive silicone-based composition of the present invention is used as a two-component type, the two-component type is composed of a combination of a first component (referred to also as "first composition") and a second component (referred to also as "second composition"), and curing is promoted by mixing the first component and the second component.

In the description below, a composition obtained from the first component and the second component will be described as a two-component curable thermally conductive composition. In the two-component curable thermally conductive composition, the first component is a composition containing a base resin (the alkenyl group-containing organopolysiloxane) and the second component is a composition containing a curing agent (the hydrogenorganopolysiloxane). In the two-component, as described above, the first component is filled in a first container; and the second component is filled in a second container composed of the above-mentioned specific resin-made container, and the long-term storage stability of the two-component type can thereby be secured.

The above-mentioned thermally conductive silicone-based composition contains the hydrogenorganopolysiloxane for curing the alkenyl group-containing organopolysiloxane being a base resin, and in the two-component type, the hydrogenorganopolysiloxane is used as the second component (second composition). On the other hand, for the first component (first composition), there is used the composition containing, in addition to the alkenyl group-containing organopolysiloxane, an addition reaction catalyst.

By using such a first component and second component, in the case of mixing the first component and the second component, the alkenyl group-containing organopolysiloxane contained in the first component and the second component and the hydrogenorganopolysiloxane contained in the second component are additionally reacted under the presence of the addition reaction catalyst, whereby there is cured the two-component curable thermally conductive composition obtained by mixing the first component and the second component.

In the two-component curable thermally conductive composition, it is preferable that the mass ratio (second component/first component) of the first component and the second component is 1 or a value near 1; and specifically, the mass ratio is preferably 0.9 to 1.1 and more preferably 0.95 to 1.05. By thus making the mass ratio to be 1 or a value near 1, it becomes easy to prepare the two-component curable thermally conductive composition.

Further in the two-component curable thermally conductive composition, it is preferable that the viscosity ratio (second component/first component) of the first component and the second component is 1 or a value near 1; and specifically, the viscosity ratio is preferably 0.5 to 2.0 and more preferably 0.8 to 1.2. By thus making the viscosity ratio to be 1 or a value near 1, it becomes easy to homogeneously mixing the two-component curable thermally conductive composition.

In two-component curable compositions, generally, the content (mass) of an alkenyl group-containing organopolysiloxane (base resin) is higher than that of a hydrogenorganopolysiloxane (curing agent). In the present invention, however, due to that the second component (the thermally conductive silicone-based composition) contains, in addition to the hydrogenorganopolysiloxane, the alkenyl group-containing organopolysiloxane as described above, it becomes easy to adjust the mass ratio of the first component and the second component at 1 or a value near 1 as described above. Further it becomes easy to adjust the mass ratio at 1 or a value near 1 also by making the thermally conductive filler to be contained in both the first component and the second component, as described later.

As the addition reaction catalyst to be added to the first component, various types of metal catalysts can be used, and platinum-based catalysts are preferable. The platinum-based catalysts include chloroplatinic acid, and complex compounds of chloroplatinic acid with an olefin, vinylsiloxane or an acetylene compound. The amount of the addition reaction catalyst to be added is, with respect to the total amount of organosilicon-based compounds contained in the first component, for example, 0.1 to 2,000 ppm by mass.

It is preferable that the first component (first composition) contains, in addition to the alkenyl group-containing organopolysiloxane and the addition reaction catalyst, further the thermally conductive filler. When the thermally conductive filler is contained, in addition to the second component, also in the first component, it becomes easy for the thermally conductive filler to be homogeneously dispersed in the two-component curable thermally conductive composition when the first component and the second component are mixed. Further it becomes easy for the mass ratio and the viscosity ratio of the second component to the first component when the two-component curable thermally conductive composition is fabricated to be 1 or a value near 1 as described above.

The first component may contain the silicon compound. Due to that the silicon compound is contained, the affinity of the thermally conductive filler for the organopolysiloxanes is more enhanced and it becomes easy for the thermal conductivity to be improved as described above. Then, the details of the alkenyl group-containing organopolysiloxane, the silicon compound and the thermally conductive filler are as described above, and the details of their contents are also as described above.

That is, the content of the thermally conductive filler in the first component is, with respect to 100 parts by mass of the total amount of organosilicon-based compounds, for example, in the range of 100 to 2,000 parts by mass, preferably in the range of 400 to 1,600 parts by mass and more preferably in the range of 600 to 1,200 parts by mass.

Similarly, in the case where the first component contains the silicon compound, the content of the silicon compound in the first component is, with respect to 100 parts by mass of the total amount of organosilicon-based compounds, for example, 0.1 to 10% by mass. By making the content to be 0.1% by mass or higher, the affinity of the thermally conductive filler for the organopolysiloxanes is improved and the dispersing ability of the thermally conductive filler is enhanced and the thermal conductivity of a thermally conductive member formed from the two-component curable thermally conductive composition is raised. Then by making the content to be 10% by mass or lower, the silicon compound is prevented from inhibiting the addition reaction and deteriorating the curability. From these viewpoints, the content of the silicon compound is preferably 0.3 to 7% by mass, more preferably 0.4 to 5% by mass and still more preferably 0.5 to 2.5% by mass.

However, it is preferable that the content of the silicon compound in the first component is lower than the content of the silicon compound in the second component with respect to the total amount of organosilicon-based compounds. Further, a mode in which the first component contains no silicon compound is also preferable. Due to that the first component contains no hydrogenorganopolysiloxane as described later, it is difficult for the curability to be deteriorated by moisture infiltrating from the outside. Hence, when the content of the silicon compound is lower than in the second component and even when no silicon compound is contained, the long-term storage stability of the two-component curable thermally conductive composition can be secured.

Further, it is preferable that the first component contains no hydrogenorganopolysiloxane. Due to that the first component contains no hydrogenorganopolysiloxane, in the first component, the alkenyl group-containing organopolysiloxane is prevented from being promoted in the reaction under the presence of the addition reaction catalyst and being reacted with the hydrogenorganopolysiloxane.

On the other hand, it is preferable that the second component contains no addition reaction catalyst. Although the second component contains, as described above, in addition to the hydrogenorganopolysiloxane, the alkenyl group-containing organopolysiloxane, since the second component contains no addition reaction catalyst, no addition reaction substantially occurs in the usual storage state before the second component is mixed with the first component. Hence, it becomes easy for the two-component curable thermally conductive composition to be excellent in the long-term storage stability.

The first component may further contain other organopolysiloxanes. The details of the other organopolysiloxanes are as described above, and omitted here.

Additives other than the above usually used for thermally conductive members may be further added to the first component as required. Examples of the additives include reinforcing materials, colorants, heat resistance improvers, surfactants, dispersants, flame retardants, antidegradants and plasticizers.

The viscosity at 25°C of the second component is as described in the above thermally conductive silicone-based composition. The first component and similarly the second component are usually liquid, and the viscosity at 25°C of the first component and the viscosity at 25°C of the second component are similar, and are preferably 50 to 2,000 Pa·s, more preferably 100 to 1,000 Pa·s and still more preferably 200 to 600 Pa·s. The sticking loads at 25°C thereof are similar and preferably 0.3 N or lower.

The curing temperature of the two-component curable thermally conductive composition may suitably be selected, and although it is preferable to take a mode in which the first component and the second component are cured only by being mixed and left at room temperature (23°C), there can also be selected a mode in which curing does not progress at room temperature and curing progresses by being heated. The curing temperature of the two-component curable thermally conductive composition can be adjusted by at least any one of the kind and the amount to be added of the alkenyl group-containing organopolysiloxane, the kind and the amount to be added of the hydrogenorganopolysiloxane, the kind and the amount to be added of the reaction retardant, the kind and the amount to be added of the platinum-based catalyst, and the like.

Here, in the above description, the two-component curable thermally conductive composition has been shown as having such a constitution that at least the second component is filled in a specific resin-made container; however, the second component may not be filled in a specific resin-made container. Since the second component has a high moisture resistance as described above, and can prevent the deterioration of the curability in mingling of moisture, even in the case where the second component is not filled in a specific resin-made container, the two-component curable thermally conductive composition can exhibit the effect of improving the storage stability.

<One-component type>

The thermally conductive silicone-based composition of the present invention, in the case of a one-component type, contains, in addition to the above-mentioned ingredients, further the addition reaction catalyst. Specific examples of the addition reaction catalyst are as described above, and the amount of the addition reaction catalyst to be added is, with respect to the total amount of the above-mentioned organosilicon-based compounds, for example, 0.1 to 2,000 ppm by mass. Due to that the thermally conductive silicone-based composition of the present invention contains the addition reaction catalyst, there is promoted the addition reaction of the alkenyl group-containing organopolysiloxane and the hydrogenorganopolysiloxane.

Here, the one-component thermally conductive silicone-based composition, in the description below, will be described as a one-component curable thermally conductive composition in some cases, and the one-component curable thermally conductive composition and the two-component curable thermally conductive composition will be generically referred to simply as a curable thermally conductive composition in some cases.

It is desirable that the formulation of the one-component thermally conductive silicone-based composition is suitably adjusted so that the addition reaction does not progress at room temperature (23°C) and progresses by being heated. Specifically, the suitable adjustment is made by at least any one of the kind and the amount to be added of the alkenyl group-containing organopolysiloxane, the kind and the amount to be added of the hydrogenorganopolysiloxane, the kind and the amount to be added of the reaction retardant, the kind and the amount to be added of the platinum-based catalyst, and the like.

In the present invention, for the thermally conductive silicone-based composition, also in the case of a one-component type, the long-term storage stability is secured by filling a specific resin-made container therewith as described above.

<Thermally conductive member>

The curable thermally conductive composition of the present invention, by being cured, can form a thermally conductive member. The thermally conductive member is used in various types of applications for conducting heat, and preferably used as a heat-dissipating member. The heat-dissipating member intervene, for example, between a heating element and a heat-dissipating element, and conducts heat generated by the heating element and transfers the heat to the heat-dissipating element, from which the heat is dissipated. Here, the heating element includes various types of electronic parts, such as CPU, power amplifiers and batteries, used inside electronic devices. Then the heat-dissipating element includes heat sinks, heat pumps and housings.

Further, it is preferable that the thermally conductive member is used as an interstitial material for batteries. The thermally conductive member is used as an interstitial material for a battery, it is preferable that the thermally conductive member is used in a battery module housing a plurality of battery cells inside a housing. The thermally conductive member to be used as an interstitial material of a battery is desirably used, for example, at least either between a battery cell and a battery cell or between a battery cell and a housing.

The hardness of the thermally conductive member (that is, a cured material of the thermally conductive composition) preferably has an OO hardness of 5 to 80 as specified by ASTM D2240. When the hardness of the thermally conductive member is 80 or lower, for example, flexibility conforming to a heat-dissipating element and a heating element is imparted and even when these interstices vary, the deterioration of the thermal conductivity and the like can be prevented. On the other hand, when the hardness is 5 or higher, since the thermally conductive member has a strength in some degree, the risk of breakage becomes low. From these viewpoints, the OO hardness of the thermally conductive member is more preferably 15 to 70 and still more preferably 25 to 65.

Then, the thermal conductivity of the thermally conductive member is preferably 1.0 W/m·K or higher and more preferably 1.8 W/m·K or higher. By making the thermal conductivity to be not lower than these lower limit values, the thermal conductivity becomes good. Hence, in the case where the thermally conductive member is used between a heating element and a heat-dissipating material, heat generated by the heating element is efficiently transferred through the thermally conductive member to the heat-dissipating material, whereby the rise in the temperature of the heating element can be suppressed. The higher the thermal conductivity of the thermally conductive member, the better; but practically, the thermal conductivity is, for example, 10 W/m·K or lower.

**Examples**

Hereinafter, the present invention will be described in more detail by way of Examples, but the present invention is not any more limited to these Examples.

In the following Examples and Comparative Examples, measurement methods and evaluation methods of various physical properties were as follows.

[Viscosity]

In each of Examples and Comparative Examples, the viscosities (Pa·s) at 25°C of a first component and a second component were measured by using a B-type viscometer (a rotational viscometer DV-E, manufactured by Brookfield Engineering Laboratories, Inc.), at a rotating speed of a spindle (SC-14) set at 10 rpm.

[Thermal conductivity]

In each of Examples and Comparative Examples, equal amounts of a first component and a second component were taken out and mixed, and the resultant mixture was applied in a thickness of about 3 mm on a predetermined place of a measuring apparatus according to ASTM D5470. Then, the thermal resistance values when the thickness was 0.5 mm, 1.0 mm and 2.0 mm were measured and the thermal conductivity was calculated from the thermal resistance values of the three points.

[Moisture resistance test]

In each of Examples and Comparative Examples, a first and second containers in which a first component and a second component were sealed, respectively, were put in a thermostatic chamber of 65°C and 95%RH and allowed to stand for accelerated deterioration. The each container was taken out after the lapse of predetermined days described in each Table, and allowed to stand in an environment of room temperature (23°C) and a relative humidity of 60% for 15 min; thereafter, equal amounts (5 g) of the first component and the second component were taken out from the containers, and mixed, and the resultant mixture was applied in a thickness of 10 mm on a release film. In Examples and Comparative Examples, the resultants were allowed to stand at room temperature for 24 hours; and resultant materials obtained by being separated from the release film were used as test pieces. Here, in the accelerated deterioration test, 8 days was conceivably equivalent to one year of room temperature.

It was checked whether or not the test pieces were cured, and the OO hardness of test pieces cured was measured according to ASTM D2240. Further, in each of Examples and Comparative Examples, before being put in the thermostatic chamber, the first component and the second component were taken out from the first and second containers in which the first component and the second component were sealed, respectively; and test pieces for Examples and Comparative Examples were similarly fabricated and used as blanks, and the OO hardnesses of the blanks were also measured.

(Evaluation criteria)

The change in hardness (value percentagewise indicated of a hardness after each number of elapsed days to 100% of initial (blank)) to the hardness of the blank in each number of elapsed days was calculated and was evaluated in the following five ranking criteria. Here, test pieces which were not cured were evaluated as "1".

　　　5: 95% or higher and lower than 120%
　　　4: 70% or higher and lower than 95%
　　　3: 40% or higher and lower than 70%
　　　2: lower than 40%
　　　1: not cured

The cases having "3" or higher in the ranking at the time point of 9 days elapsed were practically usable; and the cases having "2" or lower in the ranking had a risk of practically causing malfunction.

[Curability test]

In each of Examples and Comparative Examples, a first component and a second component prepared were mixed and applied in a thickness of 6 mm, and allowed to stand at room temperature for 24 hours to cure a mixture (two-component curable thermally conductive composition) of the first component and the second component to thereby obtain test pieces for Examples and Comparative Examples. It was checked whether or not the obtained test pieces were cured, and the OO hardnesses of test pieces cured were measured according to ASTM D2240.

In each of Examples and Comparative Examples, a test piece (blank) was fabricated from a first component and a second component prepared similarly except for adding no silicon compound in the formulation of the each of Examples and Comparative Examples, by the same method as in the above. In Examples and Comparative Examples, the OO hardnesses of the blanks were also measured according to ASTM D2240.

(Evaluation criteria)

The change in hardness (value expressed by % of a hardness of a test piece of each of Comparative Examples and Comparative Examples to 100% of the corresponding blank) of Examples and Comparative Examples relative to the blank was calculated and was evaluated in the following five ranking criteria. Here, as indicated below, test pieces which were not cured were evaluated as "1".

　　　5: 95% or higher and lower than 120%
　　　4: 70% or higher and lower than 95%
　　　3: 40% or higher and lower than 70%
　　　2: lower than 40%
　　　1: not cured

(Comprehensive evaluation)

The lower value out of the above evaluations of the moisture resistance test and the curability test was taken as a grading of the comprehensive evaluation.

[Examples 1 to 19, Comparative Examples 1 to 7]

In each of Examples and Comparative Examples, each ingredient was mixed according to the formulation indicated in Tables 1 to 5 to thereby prepare a first component and a second component. There was prepared a two-component barrel "CDA 050-01-PP", manufactured by TekTool LLC, (polypropylene-made, thickness of a second barrel to be filled with a second component: 2 mm, moisture permeability of the second barrel: 0.15 $g/m^2 \cdot 24hr$). The two-

component barrel was, as illustrated in Fig. 2, one in which a first barrel and the second barrel (first and second containers) to house a first component and the second component, respectively, were integrally formed. The first component and the second component were filled in the first barrel and the second barrel of the two-component barrel, respectively, as cautiously as possible so as not to entrap air, and sealed with caps to thereby obtain a thermally conductive composition package.

[Reference Examples 1, 2]

In each of Reference Examples 1 and 2, each ingredient was mixed according to the formulation indicated in Tables 1 and 6 to thereby prepare a first component and a second component. There were further prepared a first container and a second container to house the first component and the second component, respectively. The first container and the second container used were each a metal container "φ110XH70 SEMI-W-CAN", manufactured by Seiko Advance Ltd., (tinplate-made, volume: 550 mL, wall thickness: 0.22 mm). The first component and the second component were filled in the first container and the second container, respectively, as cautiously as possible so as not to entrap air, and sealed with caps to thereby obtain a thermally conductive composition package.

[Table 1]

| First component (first composition) | | Second component (second composition) | |
|---|---|---|---|
| liquid agent (1) | 100-(a) | liquid agent (2) | 100-(b) |
| silicon compound | (a) | silicon compound | (b) |
| amorphous aluminum hydroxide (average particle diameter: 1 μm) | 140 | amorphous aluminum hydroxide (average particle diameter: 1 μm) | 140 |
| spherical alumina (average particle diameter: 3 μm) | 200 | spherical alumina (average particle diameter: 3 μm) | 200 |
| spherical alumina (average particle diameter: 70 μm) | 600 | spherical alumina (average particle diameter: 70 μm) | 600 |
| * Units of numerical values and (a) and (b) in Table 1 are parts by mass. <br> * The above liquid agents (1) and (2) were as follows. | | | |

Liquid agent (1): a liquid agent composed of a vinyl-both-terminated organopolysiloxane and a platinum catalyst. The amount of the platinum catalyst was minute as compared with that of the organopolysiloxane, and the amount of the liquid agent (1) was regarded as the amount of the vinyl-both-terminated organopolysiloxane.
Liquid agent (2): a liquid agent composed of a vinyl-both-terminated organopolysiloxane, a hydrogenorganopolysiloxane and a reaction retardant. The reaction retardant was minute as compared with that of the organopolysiloxanes, and the amount of the liquid agent (1) was regarded as the total amount of the vinyl-both-terminated organopolysiloxane and the hydrogenorganopolysiloxane.
In each of Examples and Comparative Examples, the kind and the amounts added (a) and (b) of a silicon compound were as indicated in the following Tables 2 to 6.

[Table 2]

| | | Example 1 | Example 2 | Example 3 | Example 4 | Example 5 | Example 6 |
|---|---|---|---|---|---|---|---|
| Name of compound | | phenyltrimethoxysilane | 3-methacryloxypropyltrimethoxysilane | 3-methacryloxypropyltriethoxysilane | n-decyltrimethoxysilane | tris(triethoxysilylpropyl) isocyanurate | tris(trimethoxysilylpropyl) isocyanurate |
| Kind of compound | | alkoxysilane compound | alkoxysilane compound | alkoxysilane compound | alkoxysilane compound | alkoxysilane compound | alkoxysilane compound |
| Molecular weight | | 198.3 | 248.4 | 290.4 | 262.5 | 742.1 | 615.8 |
| Alkoxy group content (% by weight) | | 68 | 37 | 47 | 35 | 55 | 45 |
| Amount added (a) | | 0.5 | 0.5 | 0.5 | 0.5 | 0.5 | 0.5 |
| Amount added (b) | | 1.0 | 1.0 | 1.0 | 1.0 | 1.0 | 1.0 |
| Viscosity of first component (Pa·s) | | 298 | 285 | 290 | 268 | 288 | 279 |
| Viscosity of second component (Pa·s) | | 275 | 268 | 274 | 250 | 268 | 269 |
| Moisture resistance test | 00 hardness at each number of elapsed days — 0 day | 42 | 47 | 47 | 42 | 59 | 54 |
| | 3 days | 46 | 44 | 46 | 44 | 61 | 56 |
| | 5 days | 44 | 45 | 48 | 45 | 61 | 57 |
| | 7 days | 47 | 43 | 46 | 48 | 60 | 56 |
| | 9 days | 48 | 44 | 48 | 44 | 62 | 57 |
| | Change in hardness after 9 days (%) | 114% | 94% | 102% | 105% | 105% | 106% |
| | Evaluation | 5 | 4 | 5 | 5 | 5 | 5 |
| Curability test | Change in hardness (%) | 76% | 85% | 85% | 76% | 107% | 98% |
| | Evaluation | 4 | 4 | 4 | 4 | 5 | 5 |
| Thermal conductivity (W/m·K) | | 3.05 | 3.11 | 3.09 | 3.10 | 3.04 | 3.05 |
| Comprehensive evaluation | | 4 | 4 | 4 | 4 | 5 | 5 |

[Table 3]

| | | | Example 7 | Example 8 | Example 9 | Example 10 | Example 11 | Example 12 |
|---|---|---|---|---|---|---|---|---|
| Name of compound | | | 1,6-bis(trimethoxysilyl)hexane | 1,8-bis(trimethoxysilyl)octane | methylmethoxysiloxane oligomer | methylmethoxysiloxane oligomer | methylmethoxysiloxane oligomer | methylphenyl-methoxysi-loxane oligomer |
| Kind of compound | | | alkoxysilane compound | alkoxysilane compound | alkoxysiloxane compound | alkoxysiloxane compound | alkoxysiloxane compound | alkoxysiloxane compound |
| Molecular weight | | | 326.5 | 354.5 | 3000 | 10000 | 450 | 600 |
| Alkoxy group content (% by weight) | | | 57 | 53 | 24 | 25 | 45 | 33 |
| Amount added (a) | | | 0.5 | 0.5 | 0.5 | 0.5 | 0.5 | 0.5 |
| Amount added (b) | | | 1.0 | 1.0 | 1.0 | 1.0 | 1.0 | 1.0 |
| Viscosity of first component (Pa·s) | | | 275 | 280 | 288 | 300 | 272 | 296 |
| Viscosity of second component (Pa·s) | | | 261 | 263 | 274 | 285 | 268 | 275 |
| Moisture resistance test | 00 hardness at each number of elapsed days | 0 day | 54 | 54 | 51 | 50 | 49 | 53 |
| | | 3 days | 55 | 55 | 51 | 44 | 44 | 52 |
| | | 5 days | 58 | 58 | 51 | 39 | 47 | 50 |
| | | 7 days | 60 | 57 | 50 | 32 | 46 | 49 |
| | | 9 days | 63 | 61 | 49 | 25 | 45 | 45 |
| | Change in hardness after 9 days | (%) | 117% | 113% | 96% | 50% | 92% | 85% |
| | Evaluation | | 5 | 5 | 5 | 3 | 4 | 4 |
| Curability test | Change in hardness | (%) | 98% | 98% | 93% | 91% | 89% | 96% |
| | Evaluation | | 5 | 5 | 4 | 4 | 4 | 5 |
| Thermal conductivity (W/m·K) | | | 3.02 | 3.11 | 3.08 | 3.08 | 3.08 | 3.09 |
| Comprehensive evaluation | | | 5 | 5 | 4 | 4 | 4 | 5 |

[Table 4]

| | | Example 13 | Example 14 | Example 15 | Example 16 | Example 17 | Example 18 | Example 19 |
|---|---|---|---|---|---|---|---|---|
| Name of compound | | 1,8-bis(trimethoxysilyl)octane | | | | | | |
| Kind of compound | | alkoxysilane compound | | | | | | |
| Molecular weight | | 354.5 | | | | | | |
| Alkoxy group content (% by weight) | | 53 | | | | | | |
| Amount added (a) | | 0.1 | 0.3 | 0.5 | 1.0 | 5.0 | 10.0 | 0 |
| Amount added (b) | | 0.1 | 0.3 | 0.5 | 1.0 | 5.0 | 10.0 | 1.0 |
| Viscosity of first component (Pa·s) | | 288 | 284 | 279 | 283 | 274 | 261 | 285 |
| Viscosity of second component (Pa·s) | | 272 | 271 | 269 | 266 | 261 | 250 | 273 |
| Moisture resistance test | 00 hardness at each number of elapsed days | 0 day | 51 | 49 | 55 | 54 | 44 | 38 | 59 |
| | | 3 days | 54 | 52 | 58 | 59 | 46 | 40 | 58 |
| | | 5 days | 53 | 54 | 62 | 61 | 44 | 42 | 57 |
| | | 7 days | 60 | 58 | 65 | 65 | 48 | 41 | 57 |
| | | 9 days | 23 | 41 | 56 | 54 | 44 | 40 | 52 |
| | Change in hardness after 9 days (%) | | 45% | 84% | 102% | 100% | 100% | 105% | 88% |
| | Evaluation | | 3 | 4 | 5 | 5 | 5 | 5 | 4 |
| Curability test | Change in hardness (%) | | 93% | 89% | 100% | 98% | 80% | 69% | 107% |
| | Evaluation | | 4 | 4 | 5 | 5 | 4 | 3 | 5 |
| Thermal conductivity (W/m·K) | | | 3.12 | 3.10 | 3.05 | 3.06 | 3.05 | 3.12 | 3.05 |
| Comprehensive evaluation | | | 3 | 4 | 5 | 5 | 4 | 3 | 4 |

[Table 5]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Name of compound | dimethyldimethoxysilane | methylphenylmethoxysiloxane oligomer | methylphenylmethoxysiloxane oligomer | 1,8-bis(trimethoxysilyl)octane | - | phenyltrimethoxysilane | phenyltrimethoxysilane |
| Kind of compound | alkoxysilane compound | alkoxysiloxane compound | alkoxysiloxane compound | alkoxysilane compound | - | alkoxysilane compound | alkoxysilane compound |
| Molecular weight | 120.2 | 400 | 800 | 354.5 | - | 198.3 | 198.3 |
| Alkoxy group content (% by weight) | 52 | 15 | 15 | 53 | - | 68 | 68 |
| Amount added (a) | 0.5 | 0.5 | 0.5 | 1.0 | 0 | 0 | 15 |
| Amount added (b) | 1.0 | 1.0 | 1.0 | 0 | 0 | 0.05 | 15 |
| Viscosity of first component (Pa·s) | 284.0 | 286.0 | 278.0 | 282 | 288 | 285 | 254 |
| Viscosity of second component (Pa·s) | 269.0 | 268.0 | 271.0 | 265 | 274 | 271 | 232 |
| Moisture resistance test — OO hardness at each number of elapsed days — 0 day | 52 | 54 | 53 | 54 | 55 | 55 | 21 |
| 3 days | 23 | Uncured | Uncured | Uncured | Uncured | Uncured | 19 |
| 5 days | Uncured | Uncured | Uncured | Uncured | Uncured | Uncured | 20 |
| 7 days | Uncured | Uncured | Uncured | Uncured | Uncured | Uncured | 19 |
| 9 days | Uncured | Uncured | Uncured | Uncured | Uncured | Uncured | 18 |
| Change in hardness after 9 days (%) | Uncured | Uncured | Uncured | Uncured | Uncured | Uncured | 86% |
| Evaluation | 1 | 1 | 1 | 1 | 1 | 1 | 5 |

|  |  |  | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Curability test | Change in hardness | (%) | 95% | 98% | 96% | 98% | 100% | 100% | 38% |
|  | Evaluation | | 5 | 5 | 5 | 5 | 5 | 5 | 2 |
| Thermal conductivity (W/m·K) | | | 3.10 | 3.08 | 3.05 | 3.02 | 3.12 | 3.1 | 3.15 |
| Comprehensive evaluation | | | 1 | 1 | 1 | 1 | 1 | 1 | 2 |

[Table 6]

| | | | Reference Example 1 | Reference Example 2 |
|---|---|---|---|---|
| Material of container | | | metal | metal |
| Name of compound | | | 1,8-bis(trimethoxysilyl) octane | - |
| Kind of compound | | | alkoxysilane compound | - |
| Molecular weight | | | 354.5 | - |
| Alkoxy group content (% by weight) | | | 53 | - |
| Amount added (a) | | | 0.5 | - |
| Amount added (b) | | | 1.0 | - |
| Viscosity of first component (Pa·s) | | | 288 | 299 |
| Viscosity of second component (Pa·s) | | | 268 | 285 |
| Moisture resistance test | 00 hardness at each number of elapsed days | 0 day | 53 | 55 |
| | | 3 days | 54 | 49 |
| | | 5 days | 53 | 50 |
| | | 7 days | 55 | 51 |
| | | 9 days | 55 | 48 |
| | Change in hardness after 9 days | (%) | 104% | 87% |
| | Evaluation | | 5 | 4 |
| Curability test | Change in hardness | (%) | 96% | 100% |
| | Evaluation | | 5 | 5 |
| Thermal conductivity (W/m·K) | | | 3.11 | 3.09 |
| Comprehensive evaluation | | | 5 | 4 |

It can be understood that in each above Example, even when a resin-made container having a moisture permeability in a certain range was filled with a thermally conductive silicone-based composition containing an alkenyl group-containing organopolysiloxane, a hydrogenorganopolysiloxane and a thermally conductive filler, by adding a specific silicon compound in a predetermined amount to the composition, the curability of the composition after the long-term storage became good.

By contrast, in Comparative Examples 1 to 6, since a thermally conductive silicone-based composition (second component) contained no specific silicon compound and even if containing the specific silicon compound, contained a low content thereof, the curability after the long-term storage was deteriorated. Further also when as seen in Comparative Example 7, the content of the silicon compound was too high, curing did not sufficiently progress. Then also when as seen in Comparative Example 4, the silicon compound was added only to the first composition (first component) containing no hydrogenorganopolysiloxane, the curability after the long-term storage was not good.

Then, as seen in Reference Examples 1 and 2, in the case where the container was a metal container even when the thermally conductive silicone-based composition containing the alkenyl group-containing organopolysiloxane, the hydrogenorganopolysiloxane and the thermally conductive filler was stored for a long time, no problem of deterioration of curability occurred.

**Reference Signs List**

10          BARREL (RESIN-MADE CONTAINER)
11, 21A, 21B    REAR END

| 12, 22A, 22B | OPENING |
| 13, 23A, 23B | LID BODY |
| 14, 24A, 24B | FRONT END |
| 15 | OPENING (DELIVERY PORT) |
| 16 | THERMALLY CONDUCTIVE SILICONE-BASED COMPOSITION |
| 20 | TWO-COMPONENT BARREL |
| 20A, 20B | FIRST AND SECOND BARRELS (FIRST AND SECOND CONTAINERS) |
| 25A, 25B | OPENING |
| 26A | FIRST COMPOSITION |
| 26B | SECOND COMPOSITION |
| 28 | DELIVERY PORT |
| 29 | MIXING PART |

**Claims**

1. A thermally conductive composition package comprising a resin-made container and a thermally conductive silicone-based composition filled inside the resin-made container,

   wherein the resin-made container has a moisture permeability at 40°C and 90%RH of 0.01 to 10 $g/m^2 \cdot 24$ hr as measured by the method according to JIS Z0208;
   the thermally conductive silicone-based composition comprises an alkenyl group-containing organopolysiloxane, a hydrogenorganopolysiloxane, a thermally conductive filler, and at least one silicon compound selected from the group consisting of alkoxysilane compounds and alkoxysiloxane compounds;
   the silicon compound has a molecular weight of 180 or higher and an alkoxy group content of 20% by mass or higher; and
   a content of the silicon compound with respect to the total amount of organosilicon-based compounds in the thermally conductive silicone-based composition is 0.1 to 10% by mass.

2. The thermally conductive composition package according to claim 1, wherein the thermally conductive composition package comprises a first container and a second container, and a first and a second composition filled in the first and the second container, respectively;

   the first composition comprises an alkenyl group-containing organopolysiloxane and an addition reaction catalyst; and
   the second container is the resin-made container, and the second composition is the thermally conductive silicone-based composition.

3. The thermally conductive composition package according to claim 2, wherein the first composition is free of hydrogenorganopolysiloxane.

4. The thermally conductive composition package according to claim 2 or 3, wherein the second composition is free of addition reaction catalyst.

5. A two-component curable thermally conductive composition, comprising a first composition and a second composition, wherein curing thereof is promoted by mixing the first and second compositions,

   wherein the first composition comprises an alkenyl group-containing organopolysiloxane and an addition reaction catalyst;
   the second composition comprises an alkenyl group-containing organopolysiloxane, a hydrogenorganopolysiloxane, a thermally conductive filler, and at least one silicon compound selected from the group consisting of alkoxysilane compounds and alkoxysiloxane compounds;
   the silicon compound has a molecular weight of 180 or higher and an alkoxy group content of 20% by mass or higher; and
   a content of the silicon compound with respect to a total amount of organosilicon-based compounds in the second composition is 0.1 to 10% by mass.

Fig. 1

Fig. 2

Fig. 3

## INTERNATIONAL SEARCH REPORT

| International application No. |
|---|
| PCT/JP2020/024668 |

**A. CLASSIFICATION OF SUBJECT MATTER**
C08L 83/07(2006.01)i; C08K 3/01(2018.01)i; C08K 5/541(2006.01)i; C08L 83/04(2006.01)i; C08L 83/06(2006.01)i
FI: C08L83/07; C08K3/01; C08L83/04; C08K5/541; C08L83/06

According to International Patent Classification (IPC) or to both national classification and IPC

**B. FIELDS SEARCHED**

Minimum documentation searched (classification system followed by classification symbols)
C08L83/07; C08K3/01; C08K5/541; C08L83/04; C08L83/06

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2015/155950 A1 (DOW CORNING TORAY CO., LTD.) 15.10.2015 (2015-10-15) claims, paragraphs [0033]、 [0037], [0057], [0062], [0066]-[0068], table 1-1 | 1-5 |
| X | WO 2019/021826 A1 (DOW CORNING TORAY CO., LTD.) 31.01.2019 (2019-01-31) claims, paragraphs [0021], [0087], [0114], table 1 | 1-5 |
| Y | | 5 |
| Y | JP 2000-80280 A (SHIN-ETSU CHEMICAL CO., LTD.) 21.03.2000 (2000-03-21) claims, paragraph [0031] | 5 |
| A | | 1-4 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 September 2020 (04.09.2020) | 15 September 2020 (15.09.2020) |

| Name and mailing address of the ISA/ Japan Patent Office 3-4-3, Kasumigaseki, Chiyoda-ku, Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

International application No.

PCT/JP2020/024668

| Patent Documents referred in the Report | Publication Date | Patent Family | Publication Date |
|---|---|---|---|
| WO 2015/155950 A1 | 15 Oct. 2015 | US 2017/0121462 A1 claims, paragraphs [0047], [0051], [0073], [0078], [0082]-[0086], table 1-1 EP 3130643 A1 KR 10-2016-0143782 A CN 106414612 A TW 201609978 A | |
| WO 2019/021826 A1 | 31 Jan. 2019 | TW 201908413 A | |
| JP 2000-80280 A | 21 Mar. 2000 | (Family: none) | |

Form PCT/ISA/210 (patent family annex) (January 2015)

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008038137 A